# EUROPEAN PATENT SPECIFICATION

(11) **EP 3 522 733 B1**
(45) Date of publication and mention of the grant of the patent: **14.08.2024**
(21) Application number: 17797783.2
(22) Date of filing: 10.10.2017
(51) Int. Cl.: A23D 9/00, C11B 9/02, A23L 5/42, A23L 5/44, A23L 33/10, A23L 33/105, A23L 33/115

(54) **EXTRACTION OF ESSENTIAL OILS**
EXTRAKTION VON ÄTHERISCHEN ÖLEN
EXTRACTION D'HUILES ESSENTIELLES

(30) Priority: 10.10.2016 US 201662406226 P
(43) Date of publication of application: 14.08.2019
(73) Proprietor: Sustainable Aquatics, Inc., Jefferson City, Tennessee 37760 (US)
(72) Inventor: CARBERRY, John, Talbott, Tennessee 37877 (US)
(74) Representative: Lambrinos, Matthew Franklin
(86) International application number: PCT/US2017/055858
(87) International publication number: WO 2018/071372

(56) References cited:
- EP-A1- 1 239 022
- US-A- 4 505 936
- US-A1- 2016 075 989

## Description

### BACKGROUND

Essential oils include a wide range of oleoresins and other lipophilic, but somewhat polar, substances found in plants, algae, animal matter, and in some organic chemicals. Essential oils are of value in food manufacture, pharmaceuticals, nutraceuticals, animal feeds, cosmetics, spices, and chemicals.

Essential oils that are lipophilic, but with some polar character include the capsaicin and dihydrocapsaicin molecules from the fruit of habanero peppers. These compounds are considered oleoresin carotenoids. In addition to the capsaicin and dihydrocapsaicin molecules, habanero peppers include other carotenoids and oleoresins of potential value. A molecular representation of capsaicin (C₁₈H₂₇NO₃) is provided below in Structure I, where the non-polar end of the molecule includes ethylene functionality and the polar end includes amide, ether, and alcohol functionality. Dihydrocapsaicin is the same molecule where the ethylene functionality is hydrogenated.

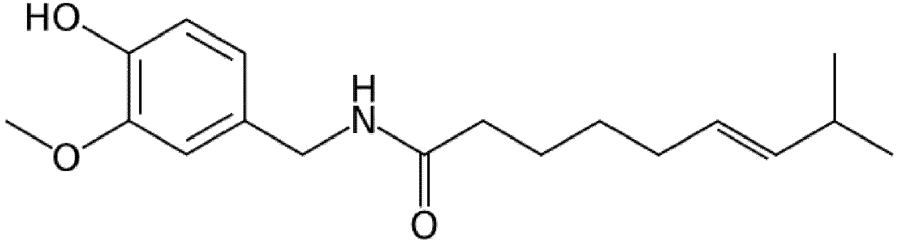

### Structure I

Another example of an essential oil that is lipophilic, but with some polar character is astaxanthin, a keto-carotenoid, which is a phytochemical belonging to the class of molecules known as terpenes. A molecular representation of free astaxanthin (C₄₀H₅₂O₄) is provided below, where the non-polar central "backbone" separates terminal polar ester and alcohol functionality.

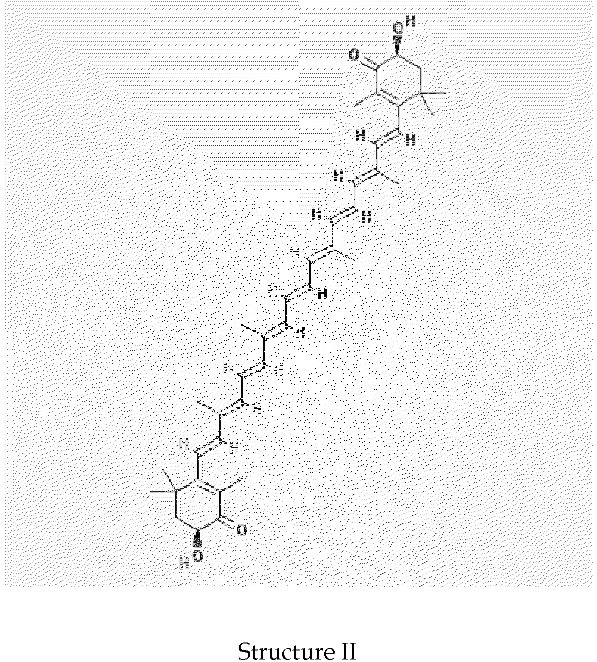

Astaxanthin is highly desired as a pharmaceutical and nutraceutical ingredient for human consumption and as a food and feed additive in agriculture and aquaculture. Astaxanthin provides the color and antioxidant functionality to several fish and animal meats, including salmon and egg yolks. Animals such as shrimp, krill, zooplankton, and salmon take up and display astaxanthin in their color, and astaxanthin contributes to the antioxidant value of their flesh or biomass when consumed by other animals. Astaxanthin also provides the red color of various other fish meats, such as trout and several cooked shellfish, such as shrimp and lobster.

Astaxanthin, similarly to other carotenoids, cannot be synthesized by animals and must be provided from the diet. Thus, mammals, including humans, lack the ability to synthesize astaxanthin. Lower animals, such as rotifers, as often grown to feed fish larvae in closed system aquaculture, also do not synthesize astaxanthin, thus producing fish larvae lacking the astaxanthin the fish larvae would normally obtain in nature through a copepod diet.

The essential oil astaxanthin occurs naturally in algae, bacteria, and yeasts. *Haematococcus pluvialis,* a fresh water alga, is the most productive source presently known for obtaining natural astaxanthin. Astaxanthin concentrations in *Haematococcus pluvialis* are known to exceed 40,000 parts per million.

The concentration of astaxanthin within the *Haematococcus pluvialis* algae cells is significantly heightened when the algae form astaxanthin-rich cysts. The vegetative, flagellated *Haematococcus pluvialis* algae produce cysts, a dormant or resting state of the algae, when subjected to stress inducing unfavorable temperatures, lack of sufficient light, and lack of sufficient nutrients. This dormant state can last for decades during which the cyst form of the algae can be dried, dehydrated, and eaten by animals. When the stress is reduced and growth conditions become more favorable, the dormant cysts of the algae can germinate into vegetative algae cells. The algae are believed to store the astaxanthin within the cysts to protect the cysts against oxidative damage until stress reduction and re-germination into vegetative algae cells occurs. As the cysts are substantially indigestible and resistant to digestive acids and enzymes, animals eating the stressed algae cysts can potentially transport the cysts to a location having more favorable growth conditions.

Astaxanthin stored within *Haematococcus pluvialis* algae cysts has exceedingly low bioavailability due to the hardness and indigestibility of the cysts. However, even if the astaxanthin is released from the cysts into an aqueous environment, the astaxanthin forms dimers and other aggregates that reduce bioavailability. This aggregation is believed attributable to the overall polarity of the astaxanthin molecule being low in relation to water, and due to the polarity of the astaxanthin molecule being isolated at the ends of the non-polar "middle" of the astaxanthin molecule.

While dormant cysts of *Haematococcus pluvialis* algae are relatively rich in astaxanthin, the astaxanthin is a small fraction by weight of the total algae/cyst biomass. For example, the astaxanthin containing carotenoid fraction of *Haematococcus pluvialis* algae typically constitutes approximately 2-7% of the dry body mass of the algae by weight. Of this 2-7% carotenoid fraction, approximately 70% is monoesters of astaxanthin, approximately 10% is diesters of astaxanthin, and approximately 5% is free astaxanthin by weight. The remaining approximately 15% of the 2-7% carotenoid fraction is typically a mixture of beta-carotene, canthaxanthin, lutein, and other compounds.

In addition to natural sources, such as *Haematococcus pluvialis* algae cysts, astaxanthin also is available from several synthetic sources. However, conventional synthetic production results in different ratios of the three astaxanthin stereoisomers in relation to the naturally produced stereoisomer ratios. The synthetic stereoisomer ratio of approximately 1:2:1 (3S,3'S:3R,3'S:3R,3'R) fails to produce the same color in feeds as the naturally derived stereoisomer ratio, which favors the SS stereoisomer.

Current processes for natural astaxanthin production via controlled growth of algae typically involve setting up a growth phase of algae, often in ponds or bioreactors filled with water. Such bioreactors can be indoors using artificial light sources or outdoors using sunlight. During this stage of production, typically 8 to 10 days or longer, nutrition is added to the water including the *Haematococcus pluvialis* algae culture. Nutritional elements may include nitrates, phosphates, sodium, and silicates, as needed to facilitate algal growth.

The grown algae are then subjected to a stress phase to promote the production of cysts, and thus astaxanthin, by the algae. Typically, stress is accomplished by subjecting the algae to nutritional withdrawal in conditions otherwise optimal for photosynthesis, i.e., in the presence of sufficient moisture, warmth, light, and carbon dioxide, and absent competition from other species. Thus, the stress phase relies on the algae to consume the nutrients in the water to depletion or near depletion before significant cyst formation. However, this "stress through starvation regiment" is a relatively long process that leaves many of the cells in a state resulting in death, not cyst formation. This death and subsequent decay of a portion of the algae cells may result in undesirably low yields of astaxanthin as a percentage of total algal biomass and further result in undesired contaminants in the algae and water mixture. While astaxanthin should theoretically approach or exceed 4% by weight of the biomass after the stress phase, the obtained astaxanthin concentration is often much lower due to death of algae cells containing relatively low concentrations of astaxanthin. The goal of the growth phase is to stress grown algal cells to produce astaxanthin-rich cysts, not to kill the grown cells before they can produce cysts.

In addition to the difficulties of algae/cyst production, many of the conventional processing techniques for breaking down the cell walls of the *Haematococcus pluvialis* cysts are difficult, cumbersome, and/or destructive to the astaxanthin molecule. The relatively high density and hardness of the astaxanthin containing cysts makes the cysts largely indigestible if consumed by animals, thereby limiting the bioavailability of the astaxanthin contained within the cysts. Conventional harvesting processes to free the astaxanthin from the astaxanthin-rich cysts typically include three stages. First, a mixture of water and algae with the included cysts is centrifuged to remove water. Then, the dehydrated algae is ground and/or treated with acid in an attempt to break the algae cells and cysts to liberate the astaxanthin. While acids are capable of breaking the cell walls of *Haematococcus pluvialis* cells and the cysts, the acids can also oxidatively or otherwise degrade the astaxanthin released from the cells, especially if not carefully exposure time and pH controlled. Conventional methods for grinding cyst-enriched *Haematococcus pluvialis* cells tend to be imprecise and can result in the oxidation of the astaxanthin molecule. Neither can they grind to a small enough particulate size to have a substantial impact on the cysts. Too much thermochemical stress through the use of heat or heat generated during grinding to break the cysts also can oxidatively and otherwise degrade the astaxanthin. Finally, the mixture of broken algae cells, broken cysts, and liberated astaxanthin is spray dried or otherwise prepared for packaging. However, the bioavailability of astaxanthin extracted by these conventional methods is very low, generally below 15% of the weight of the essential oil in the originating biomass is extracted. An example of a method of extracting astaxanthin is set out in US2016/075989.

Other examples of essential oils that are lipophilic, but with some polar character are the Tetrahydrocannabinol (THC) and Cannabidiol (CBD) oils present in the cannabis sativa plant. A molecular representation of cannabidiol (C₂₁H₃₀O₂) is provided below in Structure III, where the non-polar end of the molecule includes a non-polar five-carbon alkane chain connected to a polar alcoholic "middle" and then a relatively non-polar hexene/ethylene end. The cannabis plant includes other cannabinoids that are lipophilic, but with some polar character. Multiple varieties of the cannabis plant exist, some with approximately 0.3% or less cannabinoids by weight.

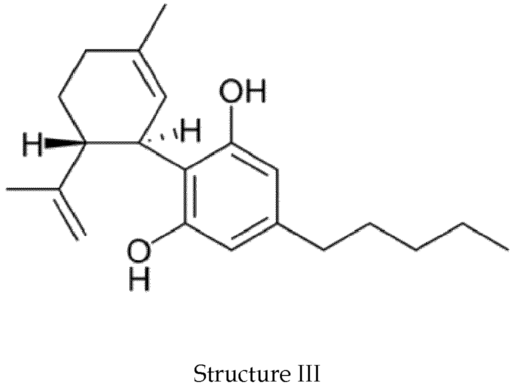

In addition to capsaicin compounds, cannabis compounds, and astaxanthin, other lipophilic essential oils having some polar character also are desirable for extraction and concentration. Some examples of animal-based essential oils include extracts from sea foods, such as green shell mussels, shark cartilage, shell fish, collagen extracts, docosahexaenoic acid (DHA), eicosapentaenoic acid (EPA) from fish, and lecithin from egg yolk. Some examples of additional plant-based essential oils include concentrated oils from peppers, such as jalapeno and others, concentrated oils from tobacco, garlic oil from garlic bulbs, lycopene from tomatoes, agar from agarwood, ajwain oil from the leaves of carum copticum, angelica root oil from angelica archangelica, anise oil from the pimpinella anisum, asafetida oil, balsam or peru from myroxylon, basil oil from basil, hop concentrate, germ oil from wheat, ginsenoside from ginseng, oil of grape seed, pigments from chili, and the like. The paper entitled Supercritical Fluid Extraction from Vegetable Materials, Helena Sovova, and Roumiana P. Stateva, Rev Chemical Engineering 27 (2011) by Walter de Gruyter, Berlin DOI 10.15.15/REVCE 2011.002, Table 1, p. 84 provides a list of essential oils and other materials that may be extracted.

To realize the enhanced nutritional or pharmacological value provided by essential oils when consumed as food or as a feed additive, the essential oils first require extraction from a biological source and processing into a relatively pure concentrate with acceptable bioavailability. Protecting the essential oil concentrate from oxidation also may be desired to provide acceptable bioavailability when consumed after storage. Optimally, the bioavailability of the extracted and concentrated essential oil would be 100%; however, such bioavailability performance is unlikely to be attained. Thus, an extracted and concentrated essential oil having a bioavailability of approximately 70% would be acceptable for most applications as only 30% of the "essential oil" is inactive. However, in the reverse instance where only 30% of the "essential oil" is bioavailable, the extracted and concentrated essential oil has little usefulness as approximately 70% of the material is inactive. Such low bioavailability for conventionally extracted essential oils means that the majority of the extracted and concentrated essential oil included in a feed, nutraceutical, pharmaceutical, or other final preparation is inactive. Thus, for commercial viability, extracted and concentrated essential oil production requires industrialization at economic scales to achieve low production costs, but a key factor is the bioavailability of the extracted essential oil.

In an attempt to ameliorate the disadvantages of conventional acid, milling, and heating techniques for essential oil extraction, supercritical carbon dioxide extraction ("SCCO2") has also been used. SCCO2 methods attempt to extract a portion of the essential oil from the remaining cellular matter without resorting to acids and/ or heat. However, SCCO2 methods use carbon dioxide, which has a low polarity and therefore poor ability to solubilize lipophilic essential oils - this is especially true for astaxanthin. To overcome the non-polarity of the carbon dioxide solvent, methanol or ethanol may be added to the carbon dioxide to increase solvent polarity. However, the amount of alcohol that may be added to the supercritical carbon dioxide is limited if the beneficial extraction abilities of the supercritical carbon dioxide is to be retained. Thus, the more polarity added to the supercritical extraction fluid with alcohols, the less supercritical extraction effect is retained.

Another issue with SCCO2 extraction in the astaxanthin/cyst context is cyst diminution during extraction. While the cysts have an original diameter of approximately 60 microns, the cysts contract to approximately 3-5 microns during extraction. This low temperature induced contraction is believed to damage the astaxanthin molecule in addition to the extraction process chiefly extracting 3-5 micron indigestible, contracted cysts instead of non-contracted indigestible 60 micron cysts or the bioavailable astaxanthin molecule. The SCCO2 extraction process is also believed to oxidatively degrade the astaxanthin that is successfully extracted. Thus, the bioavailability for SCCO2 extracted astaxanthin remains very low.

As can be seen from the above description, there is an ongoing need for improved processes for isolating essential oils that include improved methods and processes for producing essential-oil-enhanced biomass and improved methods and processes for extracting and concentrating the essential oils from the essential-oil-enhanced biomass. There also is a need for an improved process that provides a relatively high yield of purified, substantially non-oxidized essential oils and that precludes or reduces thermochemical stress, oxidation, and contamination of the essential oils during extraction and concentration.

### SUMMARY

In one aspect, a method of extracting an essential oil from a plant-based biomass in accordance with claim 1 is provided. Claims 2 to 15 define further embodiments of the method.

Optionally, the method can include the step of removing the solvent from the edible material to provide the bioavailable essential oil enriched feed or food additive as the edible material including transferred essential oil.

Optionally, the method can include the step of separating the solution the milled byproduct biomass to provide the bioavailable essential oil enriched food additive or feed as the milled byproduct biomass.

Other systems, methods, features and advantages of the invention will be, or will become, apparent to one with skill in the art upon examination of the following figures and description. It is intended that all such additional systems, methods, features, and advantages be included within this description, be within the scope of the invention, and be protected by the claims that follow. The scope of the present invention is defined solely by the appended claims and is not affected by the statements within this summary.

### BRIEF DESCRIPTION OF THE DRAWINGS

The figures represent example techniques and structures designed to carry out the objects of the present general inventive concept, but the present general inventive concept is not limited to these examples. In the accompanying drawings and illustrations, the sizes and relative sizes, shapes, and qualities of lines, entities, and regions may be exaggerated for clarity. A wide variety of additional techniques and structures will be more readily understood and appreciated through the following description, with reference to the accompanying drawings.
FIG. 1 represents a method of producing and extracting at least one essential oil from a biological source.
FIG. 2 represents a method of extracting essential oils from an essential oil enriched biomass.
FIG. 3 represents a method of extracting essential oils from a biomass.
FIG. 4 represents a method of extracting essential oils from a biomass.
FIG. 5 represents a method of manufacturing a gelatin-based vitamin supplement.
FIG. 6 represents a method of manufacturing a bioavailable essential oil enriched feed or food additive with a previously extracted essential oil.
FIG. 7 represents a method of manufacturing a bioavailable essential oil enriched feed or food additive including the biomass originating the essential oil.

### DETAILED DESCRIPTION

A method of enhancing, extracting, and concentrating essential oils from biological plant sources for potential use in food manufacture, pharmaceuticals, nutraceuticals, animal feeds, cosmetics, spices, chemical manufacture, and the like is described. The essential oils are extracted from a plant-based biomass selected from cannabis and tobacco plants through milling in a solvent to form a solution of the essential oil in the solvent. The solvent is or is part of an oxygen-excluding cover fluid than reduces oxidative and other degradation of the essential oil during milling and isolation. The solubilized essential oil may be allowed to adhere to the originating milled biomass to form a feed or nutritional supplement. The solvent may be evaporated from the solubilized essential oil to form a carotenoid concentrate. This carotenoid concentrate may be used directly, adhered to a different biomass than the originating biomass, or used in combination with pharmaceutical, nutritional, or feed preparations. The carotenoid concentrate is preferably adhered to the different biomass through milling under a cover to reduce oxidative and other degradation.

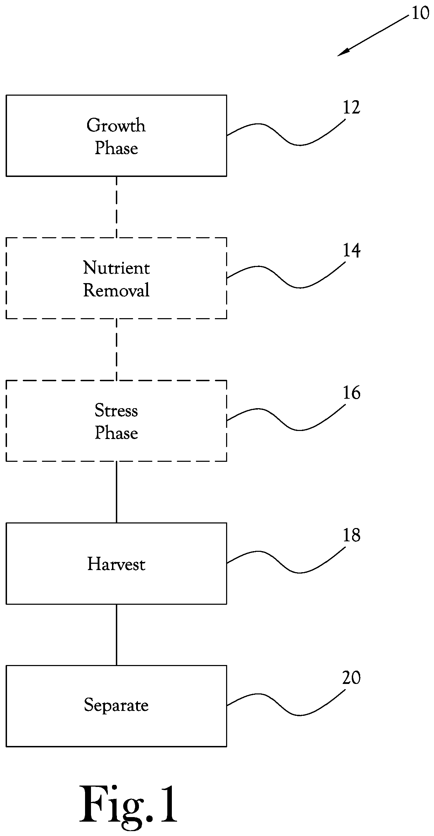

FIG. 1 represents a method 10 of producing and extracting at least one essential oil from a plant source. The essential oils include a wide range of oleoresins and other lipophilic, but somewhat polar, substances found in plants. The biological sources of essential oils are cannabis and tobacco.

In growth phase **12,** the biological source of the essential oil is grown. When the essential oil is THC or CBD, the cannabis plant may be similarly grown.

In harvest phase **18,** the essential oil including biomass of the biological source is harvested. In the case of pepper plants, the peppers may be collected. In the case of cannabis plants, the flowers, the leaves, or the stalks, and any combination thereof, may be collected. Regardless of the harvesting method used, a biomass with essential oil content and little residual water is produced. The biomass also may be dried prior to milling, as discussed further below.

In separation **20,** the essential oils are separated from the harvested biomass to isolate essential oils from the biomass. Preferably, the separation **20** reduces the oxidation of the essential oils as the essential oils are separated and isolated from the biomass.

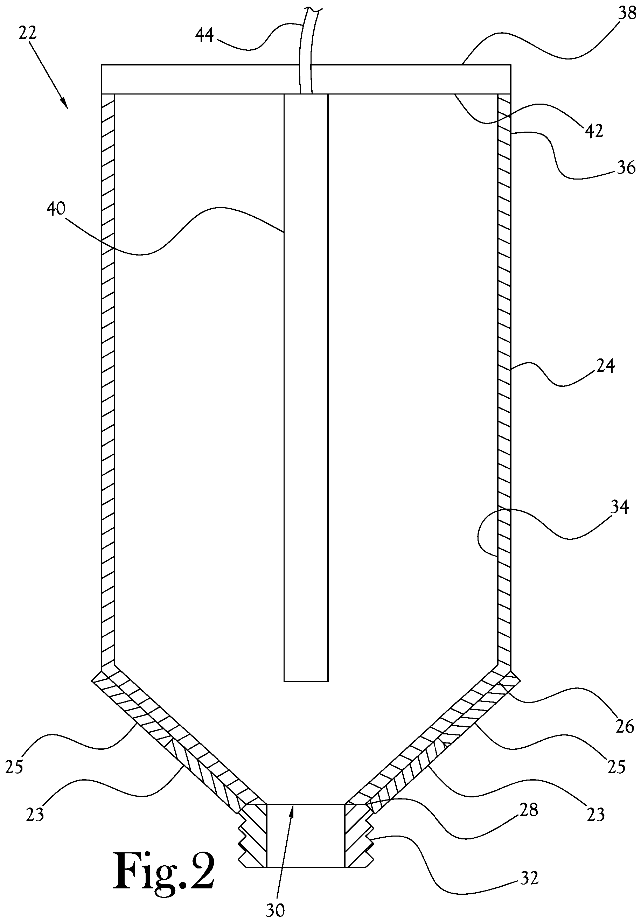

FIG. 2 represents the method **20** of extracting essential oils from an essential oil rich plant-based biomass. The essential oil rich biomass introduced to the mill may be habanero peppers including capsaicin compounds. The essential oil rich biomass introduced to the mill may be cannabis plants including cannabinoid compounds. The essential oil rich biomass introduced to the mill may be *Haematococcus pluvialis* algae including astaxanthin, Phaffia rhodozyma yeast including astaxanthin, or cells rich in omega 3 fatty acids, such as eicosapentaenoic acid (EPA) and/or docosahexaenoic acid (DHA).

Plant-based biomasses from which essential oils may be extracted by the method **20** tobacco and cannabis plants.

In **82,** the biomass and a cover are combined in a mill. One form of such mill is an attrition mill with a vessel having a generally annular interior, a shaft extending along a central axis of the vessel, a plurality of paddles extending orthogonally from the shaft, and a plurality of media including balls of ceramic or other substantially hard, non-reactive material. The mill is preferably configured such that the shaft and associated paddles may be rotatably driven about the central axis within the vessel to agitate the media, biomass, and cover. The shaft and associated paddles are preferably configured to be capable of being driven at relatively high revolutions per minute ("RPM"), e.g. 50-1,200 RPM, preferably 50-800 RPM. Preferable milling media include zirconia and alumina materials, which may be sized at approximately 3 to 6 millimeters in diameter. The 3 millimeter milling media provide an approximately 70 micron contact area on impact, for example. The mill is preferably configured with a jacket that can include a liquid to regulate the interior of the mill. The mill is preferably configured to operate at or near atmospheric pressure.

The forces applied by the ball media to the biomass are fundamentally different than those applied by conventional bulk grinding or SCCO2 techniques. Unlike with bulk grinding, crushing, chopping, and the like, ball milling is fundamentally different due to the high shear forces created simultaneously with impact force. These forces also are continually applied to the biomass in the presence of the cover, allowing for solubilization of the essential oil upon release from the physical structure of the biomass. Furthermore, the shear and impact forces applied to the biomass are not substantially decreased as the average particulate diameter of the biomass is reduced as would be the case for other methods where smaller particulates are shielded from continued size reduction by the larger particulates.

Unlike SCCO2 extraction techniques that apply a static pressure to the biomass during the extraction, the shear and impact forces applied to the biomass particulates increase as the average diameter of the biomass particulates decrease. The physical structures of biomass materials also have a high resistance to the substantially static pressure applied during SCCO2 extraction, but have a substantially lower resistance to the shear forces applied by the ball media during the milling. Neither does the SCCO2 method apply mechanical agitation or "stirring" to the biomass, which allows for the essential oil in the interior of the biomass to be shielded from extraction. Thus, while the pressure within the attrition mill is significantly less than the pressure within the SCCO2 extraction vessel, the "pressure" in the form of impact and shear forces the attrition mill applies to the biomass is significantly greater.

The mill preferably includes internal milling and containment surfaces fabricated from materials that are substantially non-reactive to essential oils such that an essential-oil-rich biomass may be contained and milled within the mill with limited, and preferably no, contact with surfaces other than the non-reactive surfaces within the mill. In addition or instead of being fabricated from materials that are substantially non-reactive to the essential oils, the shaft, paddles, and interior surfaces of the mill vessel may be coated with a non-reactive coating, such as for example silicon nitride, polytetrafluoroethylene, or the like. Other types of milling apparatus defining other configurations of milling and containment surfaces may be used.

The cover is selected to limit exposure of the essential oil within the essential-oil-rich biomass to oxygen and other reactants in the atmosphere during the extraction process **20.** The cover is preferably a polar solvent. The cover preferably does not include liquid carbon dioxide or other "liquids" that are not liquid at atmospheric pressure. The cover preferably may be readily removed from the extracted essential oil and is edible. For example, the cover may be a volatile alcohol, preferably ethanol, sufficient to substantially coat the essential-oil-rich biomass. The cover may be other volatile solvents, such as acetone or toluene, but these are more difficult to remove from the extracted essential oil and are not edible. Instead, or in addition to alcohol, the cover may be a hydrophobic, lipid-based oil derived from animal or vegetable sources. Thus, the cover may be selected from the group consisting of olive oil, sunflower oil, fish oil, vegetable oil, ethanol, and combinations thereof. The cover may be accompanied with an oxidatively inert gas, such as for example nitrogen, argon, and the like. Thus, depending on the essential oil, a polar alcohol, a lipid-based oil, an accompanying oxidatively inert gas, or a combination thereof may be used as the cover.

The biomass may be introduced to the mill followed by the cover, the cover may be introduced to the mill followed by the biomass, or the biomass and cover may be added substantially simultaneously.

In **83,** additional ingredients optionally may be added to the mill for milling and/or mixing with the biomass and the cover.. Other additional ingredients may be added to the mill.

Following the combination of the biomass with the cover **82,** and the optional addition of one or more additional ingredients **83,** the mill is activated **84.** During the milling **84,** the contents of the mill are reduced in size as the physical structures and cells of the biomass are broken open to release the essential oils. The milling **84** may also reduce the average particulate diameter of the released essential oils under cover of the cover. Thus, if an insoluble aggregate of the essential oil is released from the biomass or forms during milling, the milling **84** can reduce the size of the aggregate to a molecular level where the molecules constituting the essential oil are soluble in the cover. Furthermore, the cover discourages oxidation or other atmospheric-based contamination of the essential oils during the milling **84.**

During the milling **84,** most biomasses benefit from milling at higher than room temperature to increase the rate of extraction. For example, during the extraction of cannabinoids from cannabis biomass, the mill is maintained at an internal temperature above 60 degrees, preferably from 60 to 80 degrees, and more preferably from 67 to 73 degrees Celsius. Preferably, the internal temperature of the mill is controlled to be close to the boiling point of the room temperature liquid or liquids forming the cover.

In the milling **84,** a mixture in the form of a slurry is produced including the milled biomass byproduct, essential oils, any optionally added additional ingredients, and the cover. As the cover is or includes a solvent for the essential oil, the milling **84** of the biomass results in a solution, with the essential oil as a solute and the cover or a portion of the cover as the solvent. Thus, the cover may be a solvent for the essential oil or a multi-phasic mixture including a solvent for the essential oil. Together, the cover and the milled biomass byproduct in combination form what could be considered a slurry during milling.

When the milling **84** is complete, the mixture may be removed from the mill and utilized by an end user, or packaged for subsequent use by an end user. Alternatively, filtration **85** may be used to collect the solution from the milled biomass byproduct. Porosity, centrifugation, settling, filter pressing, or other "filtration" method may be used to collect the solution. If the solution is removed, the remaining milled biomass byproduct may be washed with additional aliquots of solvent to remove additional solute that failed to dissolve in the cover during the milling. As a relatively small amount of cover may be used in relation to the biomass, essential oils may be released from the biomass that cannot be solvated due to saturation of the cover at the selected temperature. Similarly, additional solvent may be added to the mixture before the filtration **85** to dissolve additional solute. The solvent may be the milling cover or a different solvent for the desired solute.

The cover may be a material which is generally edible by fish, livestock, or other animals. In this instance, upon completion of the milling **84,** the mixture may be removed and packaged for further use in, for example, marine or agriculture feed products or the like. In this instance, the cover may be an oil or an oil combined with a solvent. If the solvent is not desired in the feed, the solvent may be evaporatively removed from the oil, thus leaving the essential oil solute mixed with the oil cover. Heat, vacuum, or the like may be used to evaporatively remove the solvent from the oil and solute mixture.

Alternatively, the mixture or solution may be optionally evaporated **86** to remove substantially all of the cover. For example, when the cover is liquid ethanol, upon completion of the milling **84,** the mixture may be transferred to a vacuum dryer, whereupon the ethanol is evaporatively removed from the mixture to form a solid, granular product including the essential oil particulates and byproducts of the milled biomass. In another example, when the solution is removed from the mixture by the filtration **85,** the solvent of the solution may be evaporated from the solute and the solute dosed into oils at desired concentrations in a pure state or dried and used as very pure, high concentration essential oil.

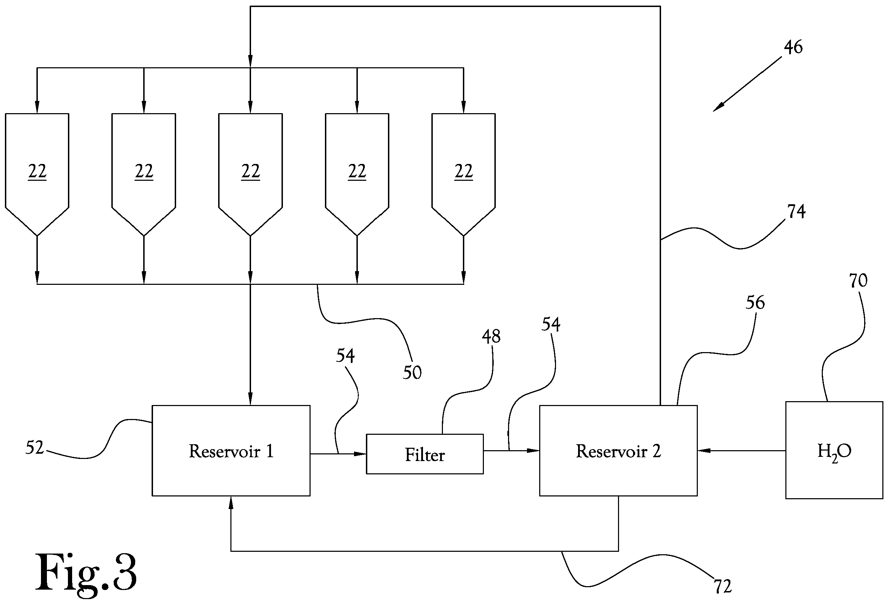

FIG. 3 represents a method **70** of extracting essential oils from a biomass. The essential oil may be cannabinoids from cannabis, or another essential oil from a tobacco biomass. Prior to combining the biomass and the cover in a mill **94,** the biomass may be dried. Drying **92** may include placing the water including biomass in a vacuum dryer, where the water including biomass is subjected to increased temperature and low pressure to remove substantially all or a portion of the water from the biomass. Pressures from -100 to -800 Torr may be used during the drying **92,** with pressures in the -700 Torr range being preferred. The low pressure may be used with or without the increasing the temperature above room temperature, and for some biomasses, the low pressure may be used with temperatures lower than room temperature. The drying **92** may be performed other than through vacuum drying, with the intent being to remove a desired portion or preferably substantially all of the water from the biomass, while reducing oxidative or other degradation of the desired essential oil/s.

Once the optional drying **92** is completed, the biomass is combined in an attrition mill with a cover **94.** The mill may be an attrition mill, such as the type manufactured by Union Process^{®} and marketed using the model number "S-1." The attrition mill may have a volume of approximately 7 liters, be lined with TEFZEL^{®}, have silicon nitride or TEFZEL^{®}-coated paddles, and contain approximately 8 kilograms of 3-millimeter media balls fabricated from silicon nitride, zirconia, or other material compatible with the collection of the desired essential oil.

After the combination **94,** the mill is operated **96,** such that the biomass within the mill, and the essential oil fraction contained therein, is milled. The paddles in the attrition mill may be rotated at approximately 400 revolutions per minute (RPM) for approximately 20 minutes, for example. Different rotational speeds and milling durations may be selected in view of the biomass, operation temperature, and cover. Throughout the milling **96,** the temperature of the contents of the mill optionally may be controlled **97.** As previously discussed, the attrition mill may be equipped with a water jacket or other heat exchange system configured to provide temperature control to the contents of the mill.

The cell walls of seeds, stalks, bark, and other cellular structures may be difficult for conventional, especially SCCO2, methods to extract. Regardless of the type of cellular structure involved, the milling **96** will free the essential oils from the biomass and allow solvation in the solvent.

Following the milling **96,** the mixture of milled biomass byproduct and solution may be removed **98** from the mill mechanically and/or by rinsing the various components of the mill with additional solvent. Portions of any undissolved essential oil may dissolve in the additional solvent added during the removal **98.** Following the removal **98** of the milled biomass byproduct and solution from the mill, the biomass byproduct is separated from the solution in solid-liquid separation **100.**

In the separation **100,** the milled biomass byproduct solids are substantially separated from the liquid solution. The solids may be removed by settling, skimming, decanting, or otherwise removing the milled biomass byproduct solids from the solution. Preferably, greater than 90% and more preferably, approximately 99% of the milled biomass byproduct solids are removed from the solution. A centrifuge may be used for cannabis.

After the separation **100,** the remaining milled biomass byproduct solids may contain additional undissolved essential oil. This remaining milled byproduct solids including undissolved essential oil may be returned in **101** to the attrition mill with additional cover for additional milling. The milling **96,** optional temperature control **97,** removal **98,** and separation **100** may be repeated, with or without the addition of un-milled biomass, to produce additional solution. This "remilling" of the previously milled biomass byproduct solids and undissolved essential oil may be repeated until a desired amount, or substantially all, of the essential oil present in the biomass is dissolved in solution.

In solvent evaporation **102,** the solvent content of the solution is reduced. The solvent evaporation **102** results in an essential oil solute product which is either highly concentrated in the remaining solvent or is essentially pure solute. The solvent evaporation **102** may be implemented with a vacuum dryer, distillation, vacuum distillation, and the like to remove a majority of the ethanol from the solution. Any solvent removal technique may be used that does not substantially degrade the essential oil through oxidation or other pathways. When the solvent is ethanol, distillation may be used to remove the volatile alcohol solvent. When the solvent is an oil or other less-volatile liquid, solvent content reduction may be facilitated by heat.

The essential oil concentrate resulting from the solvent reduction **102** is a concentrated solvent and essential oil solution, suspension, or solid/liquid mixture. The solvent evaporation **102** may be continued until the essential oil concentrate becomes a waxy paste. The solvent evaporation **102** may be continued to remove substantially all of the solvent to provide a solid. The solid may be mixed in a high energy mixer to render the essential oil into a powder. In either case, the resultant essential oil concentrate can be analyzed and weighed and the weight used to determine or estimate the concentration **103** of essential oil in the concentrate. Thereafter, the essential oil concentrate can be dosed **105** into edible oils, for example safflower oil or cod liver oil, to achieve a desired concentration of essential oil in the edible oil.

The method **70** may remove up to 98% by weight of the essential oil from the originating biomass. Essential oil recovery preferably is at least 50%, preferably at least 70%, and more preferably at least 85% by weight in relation to the essential oil weight in the originating biomass.

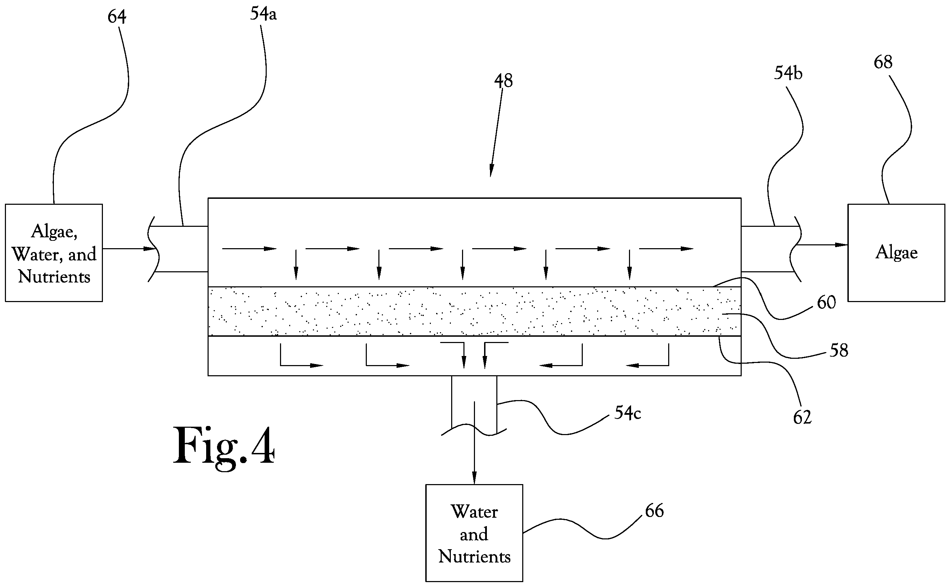

FIG. 4A represents a method **80** of extracting essential oils from a biomass. In **106,** a biomass rich in cannabinoids is shredded. The biomass may include cannabis plants or cannabis plant parts. In **108,** the biomass is dried. Drying may be performed in a vacuum oven with heat or near room temperature, under approximately -740 torr of vacuum. Other drying techniques that do not significantly oxidatively or otherwise degrade the desired essential oil may be used. While the figure visually represents the shredding **106** being performed before the drying **108,** the drying **108** may be performed before the shredding **106,** depending on the biomass and water content of the biomass.

In **110,** the shredded and dried biomass is introduced to a mill with a cover in which the desired essential oil is at least partially soluble. As previously discussed, the cover may be a solvent for the essential oil or a combination of solvent with additional liquids or gases that assist in reducing oxidation of the essential oil during milling. The mill is operated in milling **112** to break the cells of the plants, seeds, fruits, and other structures and release the essential oils into the solvent. The milling **112** can break, the tough cell walls of cannabis or tobacco stalks. The mill is operated until the average particulate diameter is less than that obtained by conventional grinding or shredding. In one instance, the mill may be operated until the average particulate diameter is in the 8 micron range to make the biomass suitable for consumption by aquatic filter feeding organisms having a "mouth" in this size regime. In other instances, milling may be continued until the average particulate diameter of the essential oil is from 100 nanometers to 100 microns, from 100 nanometers to 30 microns, or from 100 nanometers to 10 microns. Throughout the milling 110, the temperature of the contents of the mill optionally may be controlled **113.** As previously discussed, the attrition mill may be equipped with a water jacket or other heat exchange system configured to provide temperature control to the contents of the mill. Higher than room temperature milling is preferred. However, depending on the energy generated within the mill during milling, cooling may be required to maintain the temperature in the mill below the boiling point of the cover.

In removal **114,** the milled biomass byproduct, in this instance, milled plant parts, and solution including the dissolved cannabinoid, or tobacco compounds is removed from the mill. Additional solvent may be used during the removal **114** to dissolve additional essential oil into the solvent and assist in flushing the milled biomass byproduct solids from the mill. As previously discussed, the solvent may be an alcohol, preferably ethanol, an oil, or a combination thereof. In separation **116,** the milled biomass byproduct solids are separated from the solution as previously discussed. If desired, the milled biomass byproduct solids may be remilled in **117.** In solvent evaporation **118,** a portion or substantially all of the solvent is evaporated. The resulting essential oil compound concentrate may be used as-is, or dosed into edible oils, for example safflower oil, to achieve a desired concentration of CBD and/or THC in the oil. The resulting essential oil compound also may be redissolved in solvent and the constituent essential oils separated using column chromatography or similar technique. For example, in the case of cannabinoids, the CBD may be separated from the THC through column chromatography.

The methods of FIG. 3 and FIG. 4 provide a substantial enhancement in bioavailability of the isolated essential oil or oils as the physical structures and cells of the biomass are broken and reduced to a size regime where the essential oils are brought into a solvent to form solution, not extracted as a suspended solid. As the essential oils exist in the solvent as a dissolved solute, bioavailability is not significantly hampered by encapsulation or entrapment with solids or with insolubilized particulates formed when the polar portions of the essential oil molecules bond with each other. Neither are the essential oils substantially oxidized or otherwise degraded during isolation, as is common with conventional methods.

The improved bioavailability of essential oils isolated as described makes the isolated essential oils attractive in various nutraceutical applications, such as for example the preparation of gelatin-based, chewable vitamins - "gummy vitamins." Adding a powerful antioxidant, to the gummy vitamin is an attractive way to improve the value of the vitamin. However, to do so it is important to be efficient with the overall volume of the gummy vitamin.

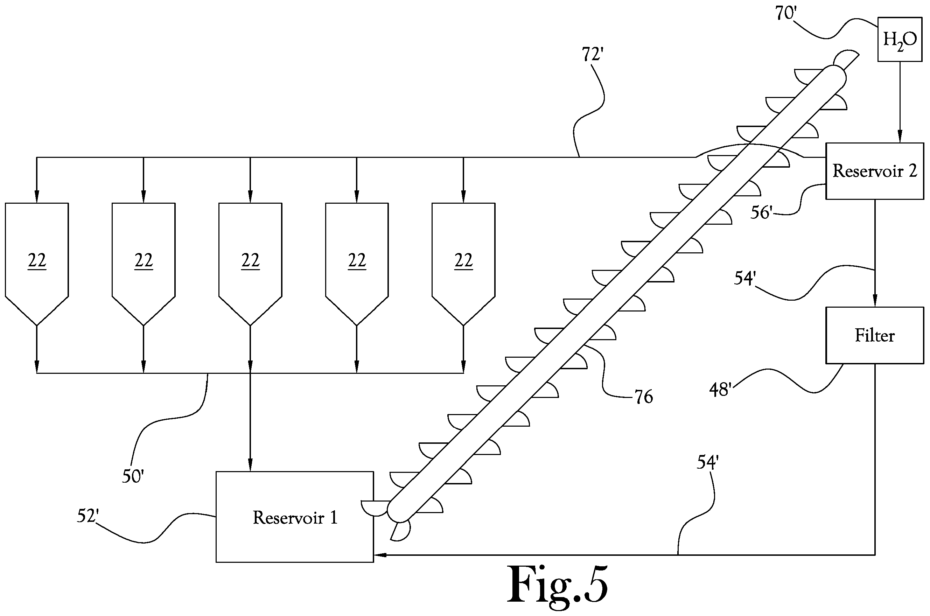

FIG. 5 represents a method **90** of manufacturing a gelatin-based vitamin supplement, thus a chewable gummy vitamin. In mixing **208,** the desired quantity of isolated essential oil and optionally liquefied gelling agent, such as collagen based gelatin or pectin, are mixed. The gelling agent may be mixed with a sufficient quantity of hot water or other liquid prior to mixing with the essential oil in optional liquification **206.** Alternatively, the gelling agent may be mixed with the essential oil, added to the water, and then heated, such that the gelatin dissolves in the water to a sufficient concentration that, once cooled, the gelatin and hot water solution sets to a gel. The specific quantities of gelatin and water may be varied to achieve a set gel of a desired consistency, and the specific ratio of gelatin to water may vary depending upon a number of factors, including but not limited to the water temperature and the amount and consistency of any optional additional ingredients.

In addition to, or in the alternative to, gelatin and pectin, other gelling agents may be used with the understanding that such alternate gelling agents may require alternate procedures for liquefaction, depending upon the specific properties of the gelling agent. For example, in various embodiments, natural gums, starches, agar-agar, or the like, may be used as the gelling agent. While water is the expected liquid for the gelling agent, other liquids may be used depending on the gelling agent.

Optionally, additional ingredients, such as flavoring or coloring agents, preservatives, and/or additional nutraceutical or vitamin ingredients **210,** may be added to the gelling agent either before, during, or after the mixing operation **208.** In this manner, a liquid precursor to a gummy vitamin is formed including the essential oil, the liquefied gelling agent, and any additional provided ingredients.

The liquid precursor is formed **212** into one or more portions and/or one or more desired shapes. For example, a mold may be used to define a plurality of cavities, each cavity defining a negative of a desired size and shape of a finished gummy vitamin. Portions of the liquid precursor may be poured into each mold cavity, thus forming **212** the liquid precursor into portion sizes and shapes resembling the sizes and shapes of each of the mold cavities. Thereafter, the liquid precursor is allowed to set in **214,** thereby forming a finished gummy vitamin.

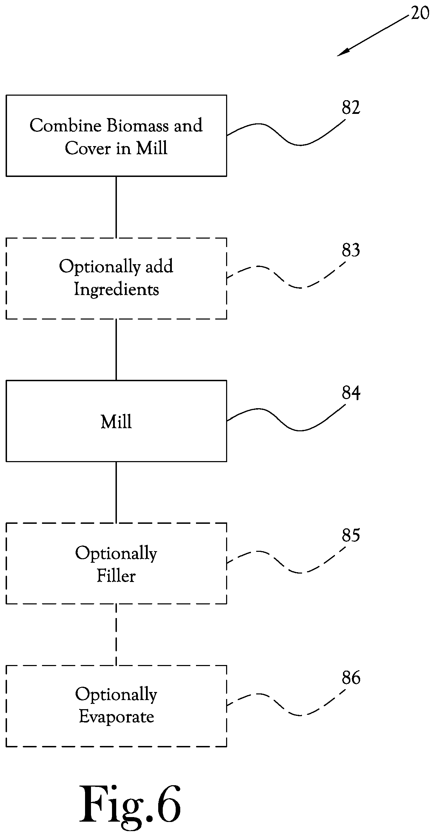

FIG. 6 represents a method **1000** of manufacturing a bioavailable essential oil enriched feed or food additive with a previously extracted essential oil. In combination **1010,** the essential oil containing solution or evaporated solvent concentrate from FIG. 3 or FIG. 4 is combined with an edible material and a cover in a mill. The edible material may be a conventional animal feed, or other edible material consumed for an actual or perceived health benefit, such as spirulina algae. Other edible materials, including potato starch, beef heart, and the like may be used. The edible materials are solid or semi-solid materials.

In milling **1020,** the mill is operated to mix the edible oil with the edible material and to reduce the average particulate diameter of the edible material. Continued reduction in the average particulate diameter of the essential oil particulates also may occur, but this is not the primary objective of the milling **1020.** The milling **1020** is continued under conditions and time to optimally transfer the essential oil from the cover to the reduced particulate diameter edible material. In removal **1030,** the mixture of cover and essential oil adhered edible material particulates are removed from the mill. This removal optionally may be facilitated with a liquid that does not substantially transfer the adhered essential oil from the reduced particulate diameter edible material. In cover removal **1050,** the cover is removed from the reduced particulate diameter edible material. This removal may be performed as previously discussed with regard to settling, filtration, solvent evaporation, or by other techniques, as in this case the product of interest is the solid or semi-solid edible material, not a solute in the cover. The edible material including the essential oil than may be further dried and packaged for sale (not shown).

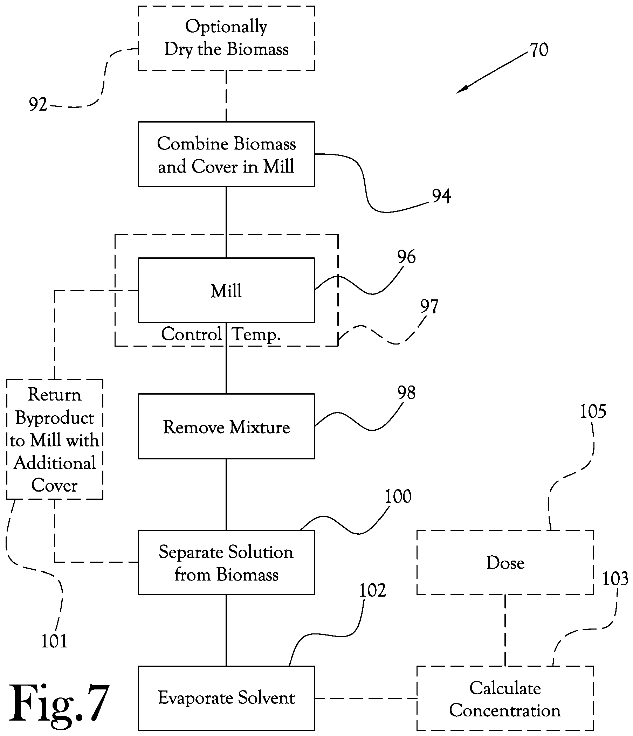

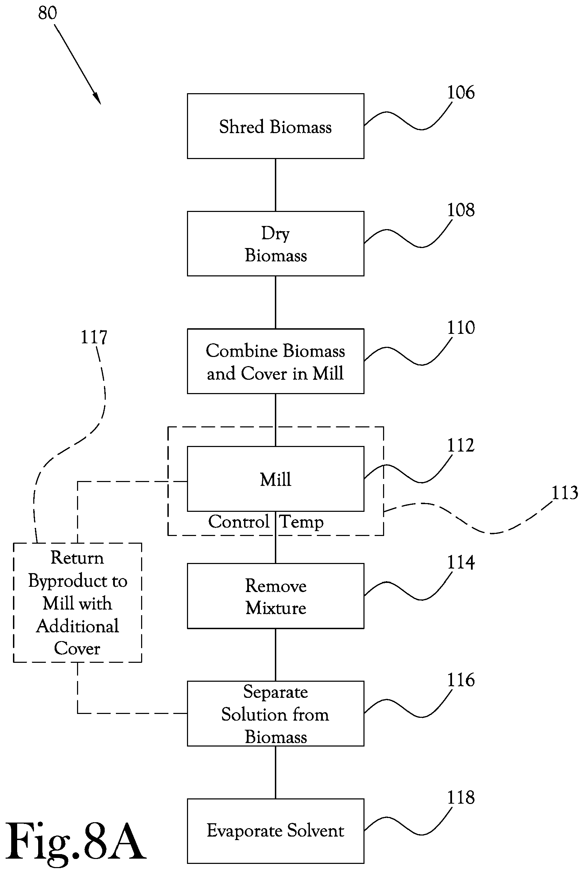

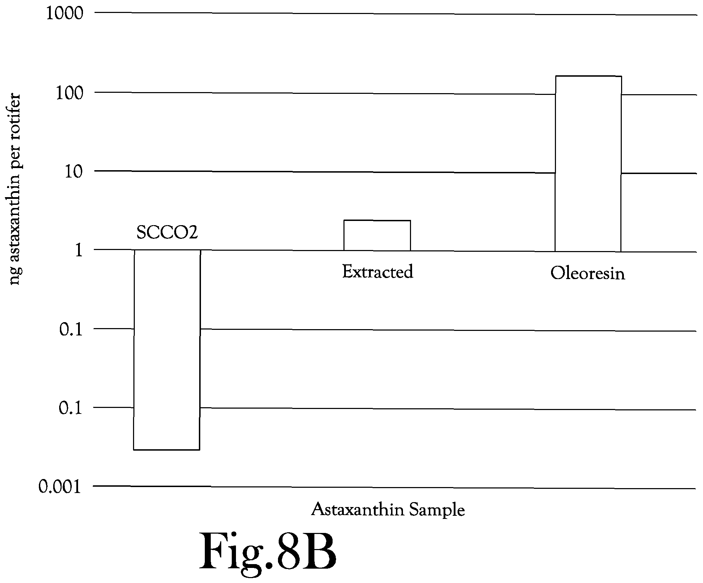

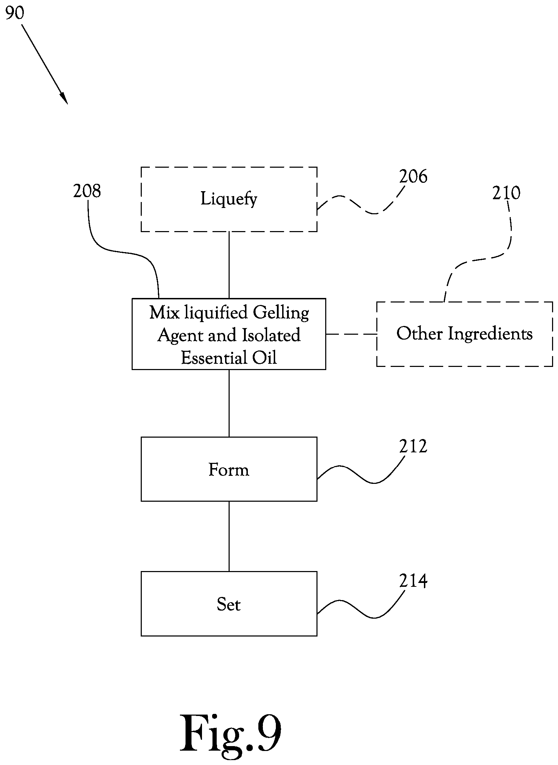

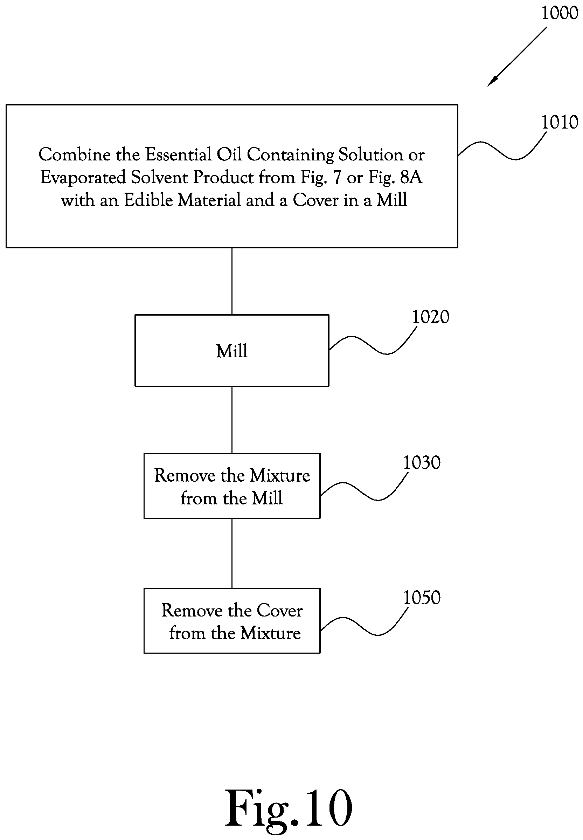

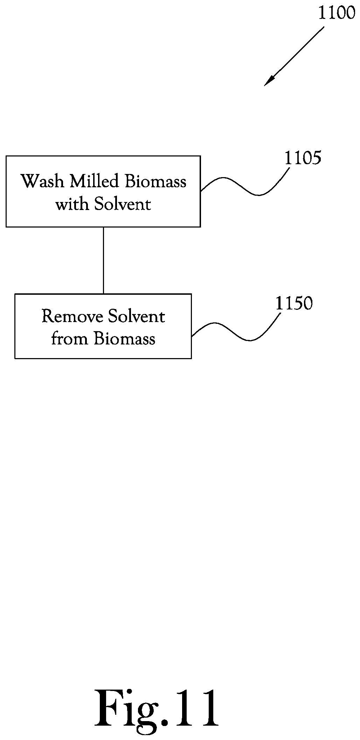

FIG. 7 represents a method **1100** of manufacturing a bioavailable essential oil enriched feed or food additive including the biomass originating the essential oil. As previously discussed, while the essential oil of interest may be present in the originating biomass, the bioavailability of the essential oil if the originating biomass were directly consumed may be exceedingly low. Such exceedingly low bioavailability may be due to the essential oil being concentrated in indigestible physical structures, such as seeds, or due to the bioactive form of the essential oil as present in the originating biomass being substantially unavailable if released into an aqueous environment.

In solvent wash **1105,** the biomass remaining after solvent removal, such as generally described in separation **100** of FIG. 3 or in separation **116** of FIG. 4, is washed with additional solvent. The remaining biomass may be washed from 1 to 10 times, preferably from 3 to 7 times, and more preferably from 4 to 6 times. The biomass optionally may be milled, stirred, agitated, heated, and the like with the solvent wash or washes (not shown) to enhance transfer of the essential oil to the solvent.

As the average particulate diameter of the biomass was substantially reduced by the prior milling, the intent is to remove the majority of the essential oil that was released from seeds, and other physical structures of the originating biomass that is not associated with the reduced particulate diameter originating biomass. Preferably, substantially all of the essential oil that was released from the physical structures of the originating biomass, but that is not associated with the reduced particulate diameter originating biomass is removed with the solvent wash.

In solvent removal **1150,** the wash solvent is removed from the reduced particulate diameter originating biomass. This removal may be performed as previously discussed with regard to solvent evaporation or by other techniques that preserve the bioavailability of the essential oil in the solvent and in the reduced particulate diameter originating biomass.

The following examples illustrate one or more preferred embodiments of the invention. Numerous variations may be made to the following examples that lie within the scope of the invention.

Comparative Example 1: Extracting and isolating astaxanthin from a *Haematococcus pluvialis* biomass.

*Haematococcus pluvialis* biomass was milled in an attrition mill with food grade ethanol using 3 mm ceramic media (zirconia in this instance) at a 400 RPM paddle speed for approximately 20 minutes at a temperature from about 60 to 70 degrees Celsius. The attrition mill was a Union Process 1S mill and about 500 grams of biomass and 800 mL of ethanol were combined in the mill. After milling for approximately 20 minutes, the ethanol was removed from the mill, new ethanol was added to the mill, and milling was repeated for approximately 20 minutes. The ethanol was again removed, new ethanol added to the mill, and milling repeated. The biomass was removed from the mill and separated from the ethanol solvent by centrifuge. The ethanol solvent was then evaporated from the astaxanthin solute with a vacuum oven using a cold trap to recover the ethanol for reuse. The astaxanthin solutes were recovered as a thick mass of oil resin, or "oleoresin".

Comparative Example 2: Manufacturing a bioavailable astaxanthin enriched feed or food additive including the *Haematococcus pluvialis* biomass.

*Haematococcus pluvialis* biomass was milled in an attrition mill with food grade ethanol using 3 mm ceramic media at a 400 RPM paddle speed for approximately 20 minutes at a temperature from about 60 to 70 degrees Celsius. The attrition mill was a Union Process 1S mill and about 500 grams of biomass and 800 mL of ethanol were combined in the mill. After milling for approximately 20 minutes, the biomass was separated from the ethanol solvent by centrifuge. The ethanol solvent was evaporated from the astaxanthin solute with a vacuum oven using a cold trap to recover the ethanol for reuse. The recovered ethanol was then recombined with the separated biomass and the mixture centrifuged. This wash and centrifuge process was repeated from 1 to 5 times after the initial separation. While most of the astaxanthin was removed, the milled algae was still stained red in color. The biomass was dried in a vacuum oven to provide an animal feed or supplement.

Comparative Example 3: Enhancing rotifer reproduction rate, population growth, and resistance to oxidative stress with bioavailable astaxanthin.

Three astaxanthin products were tested for their effect on the *Brachionus manjavacas* rotifer. The first product was unextracted astaxanthin produced by milling H. *pluvialis* in ethanol and removing the ethanol from the milled material. This first product contained about 3% astaxanthin by weight. The second product was extracted and concentrated astaxanthin obtained generally as described in Example 1. The third product was extracted and dried milled *Haematococcus pluvialis* obtained generally as described in Example 2. This production contained about 1.1% astaxanthin by weight.

Rotifer reproductive rate was assessed by determining the number of offspring an individual rotifer produced daily during a 72 hour period. Rotifer population density was determined by determining the number of rotifers present in 1 mL of water every 24 hours. Rotifer resistance to oxidative stress was determined by exposing the Rotifers to Juglone and counting the number of surviving rotifers after 24, 48, and 72 hours.

Regarding reproduction rate, the greatest increase for the first product was observed at 80 ug/ mL of the first product in water, with an approximate 41 % increase in growth rate. The greatest increase for the second product was 32% at 23 ug/mL of the second product in water - with the second product being predissolved in DMSO. The greatest increase for the third product was 43% when 400 ug/mL of the dried biomass was used. Regarding population density, the second product at a 2.3 ug/mL water concentration provided greatest population density and maintained the density longest of the three products. However, at 92 ug/mL the second product proved toxic. Regarding oxidative stress, the first product at 80 ug/mL in water provided an approximately 36% increase in rotifer survival after 72 hours. The products did not significantly increase the lifespan of the rotifers. However, the second product did provide an increase in rotifer swimming speed of approximately 47%, while the first product produced a slight increase.

These results established that enhancing the diets of rotifers with astaxanthin produced by the described methods provides marked increases in reproductive rates, growth, and density, but no appreciable increase in lifespan. The third product provided the greatest increase in rotifer reproduction at the lowest astaxanthin concentration. This is believed attributable to this product having the highest percentage of bioavailable astaxanthin in water, as the astaxanthin is bound to the edible biomass, and as previously discussed, is unlikely to form aggregates in water. Thus, using an edible, non-polar biomass as a carrier for the extracted astaxanthin is believed to maximize the bioavailability of the astaxanthin. In this way, a single portion of the astaxanthin milled from the *Haematococcus pluvialis* can be used make much greater quantities of astaxanthin enhanced, edible product than the original biomass.

Prophetic Example 1: Extracting and isolating cannabinoid compounds from a cannabis biomass.

The leaves, stalks, seeds, flowers, and any combination thereof of the cannabis sativa plant are dried and shredded. The shredded cannabis biomass is added to the mill with an ethanol cover. During milling, the temperature within the mill is increased to approximately 60 to 70 degrees Celsius. In this instance, of total mill volume, approximately 1/3^{rd} is occupied by the milling media, approximately 1/3^{rd} is occupied by the cover, and approximately 1/3^{rd} is occupied by the biomass. The milling media may be metal or ceramic.

During milling, the mill is closed to the atmosphere, thus allowing slight pressurization from volatilization of the ethanol. However, as the temperature within the mill is maintained at approximately 60 to 70 degrees Celsius and the boiling point of the ethanol cover is 77 degrees Celsius, the internal mill pressure does not exceed 200 kPa. The mill is operated at approximately 400 RPM for approximately 20 minutes. The cover may be removed from the mill, and new cover added for a repeat of the milling cycle. While not required, repeated mill cycles with new cover will increase cannabinoid recovery.

The mixture of biomass and cover along with any desired cover is then filtered using a centrifuge to remove the remaining biomass from the cover. The cover is then removed from the cannabinoid essential oils using a vacuum oven. The cover is recovered in a cold trap for reuse. The resulting cannabinoid essential oils are then dissolved in a solvent or solvent mixture suitable to separate the CBD, THC, and other cannabinoids. The separation is performed using a stationary phase column, such as a silica gel column. Once the essential oils are sufficiently separated, the separation solvent also may be removed through vacuum distillation. The resulting essential oils may be used as previously described.

To provide a clear and more consistent understanding of the specification and claims of this application, the following definitions are provided.

Oleoresins are semi-solid extracts composed of a resin in solution in an essential oil, which is conventionally obtained by evaporation of the solvent(s) used for their production. In contrast to hydrophilic essential oils often obtained by steam distillation, oleoresins abound in heavier, less volatile and lipophilic compounds, such as resins, waxes, fats and fatty oils.

A solution, in comparison to a suspension, is a liquid where the solvent and solute are homogeneously combined to form a single phase and the solid or liquid solute is dissolved in the solvent. There is no discernable space between the molecules of the solute and the solvent, and once dissolved, the solute will not settle from the solvent without a volume, temperature, or pressure change.

A suspension is a liquid where the liquid and solid particulates are heterogeneously mixed and space exists between the solid particulates and the liquid. The particulates will eventually settle from the liquid, unless the suspension is a colloid, where the particulates are too small to settle.

While various aspects of the invention are described, it will be apparent to those of ordinary skill in the art that other embodiments and implementations are possible within the scope of the invention.

## Claims

1. A method of extracting and isolating an essential oil from a plant-based biomass, the method comprising:
combining a biomass including an essential oil with a cover within an attrition mill, where
the essential oil is soluble in the cover, and
the attrition mill includes milling media;
milling the biomass and the cover in the attrition mill for a duration; reducing the particulate size of the biomass during the milling by repeatedly contacting the biomass with the milling media and maintaining the temperature within the mill above 60 degrees Celsius during a majority of the milling duration;
releasing the essential oil from the biomass to the cover during the milling;
dissolving at least a portion of the essential oil released from the biomass in the cover during the milling, where
the cover reduces the oxidation of the released essential oil in relation to the milling without the cover;
forming a mixture during the milling including
a solution of the essential oil in a solvent, where the essential oil is a solute and the cover includes the solvent, and
a milled byproduct biomass; and
separating the solution from the milled byproduct biomass, where the solution includes the essential oil
**characterised in that** said biomass is a plant-based biomass from cannabis or tobacco plants.

2. The method of any one of the preceding claims, where the cover is selected from olive oil, sunflower oil, fish oil, vegetable oil, ethanol, an oxidatively inert gas under the milling conditions, and combinations thereof.

3. The method of any one of the preceding claims, where the cover comprises ethanol.

4. The method of any one of the preceding claims, further comprising drying and shredding the biomass before combining the biomass with the cover.

5. The method of any one of the preceding claims where the essential oil includes a tobacco compound.

6. The method of any one of the preceding claims where the essential oil includes a cannabinoid.

7. The method of any one of the preceding claims, further comprising:
mixing the essential oil with a liquefied gelling agent;
forming the essential oil and the liquefied gelling agent mixture into one or more desired portions and shapes; and
allowing the gelling agent to set.

8. The method of any one of the preceding claims, further comprising:
blending the solution with an edible material;
milling the solution and the edible material to transfer at least a portion of the essential oil from the solvent to the edible material; and
removing the solvent from the edible material to provide a bioavailable essential oil enriched feed or food additive as the edible material including transferred essential oil.

9. The method of any one of the preceding claims, where the separating the solution from the milled byproduct biomass includes settling the milled byproduct biomass from the solution, optionally by centrifugation.

10. The method of any one of the preceding claims, further comprising:
washing the milled byproduct biomass with additional solvent for the essential oil to provide additional solution including the essential oil; and
separating the solution and the additional solution from the milled byproduct biomass to provide a bioavailable essential oil enriched food additive or feed as the milled byproduct biomass.

11. The method of any one of the preceding claims, further comprising reducing the particulate size of the essential oil by repeatedly contacting the released essential oil with the milling media.

12. The method of claim 11, where the milling duration continues until the average particulate diameter of the essential oil is from 100 nanometers to 100 microns.

13. The method of claim 11, where the milling duration continues until the average particulate diameter of the essential oil is from 100 nanometers to 30 microns.

14. The method of any one of the preceding claims, where the milling continues until aggregated particulates of the essential oil reach an average diameter of less than 3 microns.

## Patentansprüche

1. Verfahren zum Extrahieren und Isolieren eines ätherischen Öls aus einer pflanzenbasierten Biomasse, wobei das Verfahren umfasst;
Kombinieren einer Biomasse, beinhaltend ein ätherisches Öl, mit einer Abdeckung innerhalb einer Reibungsmühle, wobei
das ätherische Öl in der Abdeckung löslich ist und
die Reibungsmühle Mahlmedien beinhaltet;
Mahlen der Biomasse und der Abdeckung in der Reibungsmühle für eine Dauer; Verringern der Teilchengröße der Biomasse während des Mahlens durch wiederholtes Inkontaktbringen der Biomasse mit den Mahlmedien und Halten der Temperatur innerhalb der Mühle über 60 Grad Celsius während eines Großteils der Mahldauer;
Freisetzen des ätherischen Öls aus der Biomasse zu der Abdeckung während des Mahlens,
Lösen mindestens eines Teils des ätherischen Öls, das aus der Biomasse freigesetzt wurde, in der Abdeckung während des Mahlens, wobei
die Abdeckung die Oxidation des freigesetzten ätherischen Öls im Verhältnis zum Mahlen ohne die Abdeckung verringert;
Bilden eines Gemischs während des Mahlens, beinhaltend
eine Lösung des ätherischen Öls in einem Lösungsmittel, wobei das ätherische Öl eine gelöste Substanz ist und die Abdeckung das Lösungsmittel beinhaltet, und
eine gemahlene Nebenproduktbiomasse, und
Trennen der Lösung von der gemahlenen Nebenproduktbiomasse, wobei die Lösung das ätherische Öl beinhaltet;
**dadurch gekennzeichnet, dass** die Biomasse eine pflanzenbasierte Biomasse von Cannabis- oder Tabakpflanzen ist.

2. Verfahren nach einem der vorhergehenden Ansprüche, wobei die Abdeckung aus Olivenöl, Sonnenblumenöl, Fischöl, Pflanzenöl, Ethanol, einem oxidativ inerten Gas unter den Mahlbedingungen und Kombinationen davon ausgewählt ist.

3. Verfahren nach einem der vorhergehenden Ansprüche, wobei die Abdeckung Ethanol umfasst.

4. Verfahren nach einem der vorhergehenden Ansprüche, weiterhin umfassend ein Trocknen und Zerkleinern der Biomasse vor dem Kombinieren der Biomasse mit der Abdeckung.

5. Verfahren nach einem der vorhergehenden Ansprüche, wobei das ätherische Öl eine Tabakverbindung beinhaltet.

6. Verfahren nach einem der vorhergehenden Ansprüche, wobei das ätherische Öl ein Cannabinoid beinhaltet.

7. Verfahren nach einem der vorhergehenden Ansprüche, weiterhin umfassend:
Mischen des ätherischen Öls mit einem verflüssigten Geliermittel;
Formen des Gemischs aus dem ätherischen Öl und dem verflüssigten Geliermittel zu einem oder mehreren gewünschten Teilen und Formen und
Abbindenlassen des Geliermittels.

8. Verfahren nach einem der vorhergehenden Ansprüche, weiterhin umfassend:
Vermischen der Lösung mit einem verzehrbaren Material,
Mahlen der Lösung und des verzehrbaren Materials, um mindestens einen Teil des ätherischen Öls aus dem Lösungsmittel in das verzehrbare Material zu überführen; und
Abziehen des Lösungsmittels aus dem verzehrbaren Material, um ein biologisch verfügbares, mit ätherischem Öl angereichertes Futter oder einen biologisch verfügbaren, mit ätherischem Öl angereicherten Lebensmittelzusatzstoff als das verzehrbare Material, beinhaltend überführtes ätherisches Öl, bereitzustellen.

9. Verfahren nach einem der vorhergehenden Ansprüche, wobei das Trennen der Lösung von der gemahlenen Nebenproduktbiomasse ein Absetzenlassen der gemahlenen Nebenproduktbiomasse aus der Lösung, optional durch Zentrifugation beinhaltet.

10. Verfahren nach einem der vorhergehenden Ansprüche, weiterhin umfassend:
Waschen der gemahlenen Nebenproduktbiomasse mit zusätzlichem Lösungsmittel für das ätherische Öl, um zusätzliche Lösung, beinhaltend das ätherische Öl, bereitzustellen; und
Trennen der Lösung und der zusätzlichen Lösung von der gemahlenen Nebenproduktbiomasse, um einen biologisch verfügbaren, mit ätherischem Öl angereicherten Lebensmittelzusatzstoff oder ein biologisch verfügbares, mit ätherischem Öl angereichertes Futter als die gemahlene Nebenproduktbiomasse bereitzustellen.

11. Verfahren nach einem der vorhergehenden Ansprüche, weiterhin umfassend ein Verringern der Teilchengröße des ätherischen Öls durch wiederholtes Inkontaktbringen des freigesetzten ätherischen Öls mit den Mahlmedien.

12. Verfahren nach Anspruch 11, wobei die Mahldauer fortfährt, bis der durchschnittliche Teilchendurchmesser des ätherischen Öls von 100 Nanometer bis 100 Mikron beträgt.

13. Verfahren nach Anspruch 11, wobei die Mahldauer fortfährt, bis der durchschnittliche Teilchendurchmesser des ätherischen Öls von 100 Nanometer bis 30 Mikron beträgt.

14. Verfahren nach einem der vorhergehenden Ansprüche, wobei das Mahlen fortfährt, bis aggregierte Teilchen des ätherischen Öls einen durchschnittlichen Durchmesser von weniger als 3 Mikron erreichen.

## Revendications

1. Un procédé d'extraction et d'isolation d'une huile essentielle à partir d'une biomasse à base de plantes, le procédé comprenant :
la combinaison d'une biomasse incluant une huile essentielle avec un couvercle à l'intérieur d'un broyeur par frottement, où
l'huile essentielle est soluble dans le couvercle, et
le broyeur par frottement inclut un agent de broyage ;
le broyage de la biomasse et du couvercle dans le broyeur par frottement pendant une certaine durée ;
la réduction de la dimension particulaire de la biomasse pendant le broyage par la mise en contact à plusieurs reprises de la biomasse avec l'agent de broyage et le maintien de la température à l'intérieur du broyeur au-dessus de 60 degrés Celsius pendant une majorité de la durée de broyage ;
la libération de l'huile essentielle, de la biomasse vers le couvercle pendant le broyage ;
la dissolution d'au moins une partie de l'huile essentielle libérée de la biomasse dans le couvercle pendant le broyage, où
le couvercle réduit l'oxydation de l'huile essentielle libérée par rapport au broyage sans le couvercle ;
la formation d'un mélange pendant le broyage incluant
une solution de l'huile essentielle dans un solvant, où l'huile essentielle est un soluté et le couvercle inclut le solvant, et
une biomasse de sous-produit broyé ; et
la séparation de la solution et de la biomasse de sous-produit broyé, où la solution inclut l'huile essentielle
**caractérisé en ce que** ladite biomasse est une biomasse à base de plantes provenant de plantes de cannabis ou de tabac.

2. Le procédé selon l'une quelconque des revendications précédentes, où le couvercle est sélectionné parmi une huile d'olive, une huile de tournesol, une huile de poisson, une huile végétale, un éthanol, un gaz inerte en termes d'oxydation dans les conditions de broyage, et des combinaisons de ces derniers.

3. Le procédé selon l'une quelconque des revendications précédentes, où le couvercle comprend l'éthanol.

4. Le procédé selon l'une quelconque des revendications précédentes, comprenant en outre le séchage et le déchiquetage de la biomasse avant la combinaison de la biomasse avec le couvercle.

5. Le procédé selon l'une quelconque des revendications précédentes où l'huile essentielle inclut un composé de tabac.

6. Le procédé selon l'une quelconque des revendications précédentes où l'huile essentielle inclut un cannabinoïde.

7. Le procédé selon l'une quelconque des revendications précédentes, comprenant en outre :
le mélangeage de l'huile essentielle avec un agent de gélification liquéfié ;
la formation de l'huile essentielle et du mélange de l'agent de gélification liquéfié en une ou plusieurs parties et formes souhaitées ; et
le fait de laisser l'agent de gélification se gélifier.

8. Le procédé selon l'une quelconque des revendications précédentes, comprenant en outre :
la mixtion de la solution avec une matière comestible ;
le broyage de la solution et de la matière comestible pour transférer au moins une partie de l'huile essentielle depuis le solvant vers la matière comestible ; et
le retrait du solvant de la matière comestible pour fournir un additif alimentaire ou aliment enrichi en huile essentielle biodisponible en tant que matière comestible incluant l'huile essentielle transférée.

9. Le procédé selon l'une quelconque des revendications précédentes, où la séparation de la solution et de la biomasse de sous-produit broyé inclut le tassement de la biomasse de sous-produit broyé de la solution, en option par centrifugation.

10. Le procédé selon l'une quelconque des revendications précédentes, comprenant en outre :
le lavage de la biomasse de sous-produit broyé avec un solvant additionnel pour l'huile essentielle afin de fournir une solution additionnelle incluant l'huile essentielle ; et
la séparation de la solution et de la solution additionnelle d'avec la biomasse de sous-produit broyé afin de fournir un aliment ou additif alimentaire enrichi en huile essentielle biodisponible en tant que biomasse de sous-produit broyé.

11. Le procédé selon l'une quelconque des revendications précédentes, comprenant en outre la réduction de la dimension particulaire de l'huile essentielle par la mise en contact à plusieurs reprises de l'huile essentielle libérée avec l'agent de broyage.

12. Le procédé selon la revendication 11, où la durée de broyage continue jusqu'à ce que le diamètre particulaire moyen de l'huile essentielle soit de 100 nanomètres à 100 microns.

13. Le procédé selon la revendication 11, où la durée de broyage continue jusqu'à ce que le diamètre particulaire moyen de l'huile essentielle soit de 100 nanomètres à 30 microns.

14. Le procédé selon l'une quelconque des revendications précédentes, où le broyage continue jusqu'à ce que des particules agrégées de l'huile essentielle atteignent un diamètre moyen inférieur à 3 microns.
